# FASCICULE DE BREVET EUROPEEN

(11) **EP 3 682 525 B1**
(45) Date de publication et mention de la délivrance du brevet: **13.04.2022**
(21) Numéro de dépôt: 18782782.9
(22) Date de dépôt: 12.09.2018
(51) Int. Cl.: H02J 7/02, H02M 3/155

(54) **CHARGEUR DE VEHICULE COMPRENANT UN CONVERTISSEUR DC/DC**
FAHRZEUGLADER MIT GLEICHSPANNUNGSWANDLER
VEHICLE CHARGER COMPRISING A DC/DC CONVERTER

(30) Priorité: 12.09.2017 FR 1758459
(43) Date de publication de la demande: 22.07.2020
(73) Titulaire: Valeo Systèmes de Contrôle Moteur, 95892 Cergy - Pontoise (FR)
(72) Inventeur: BAUDESSON, Philippe, 95892 Cergy Pontoise (FR)
(74) Mandataire: Valeo Powertrain Systems
(86) Numéro de dépôt international: PCT/FR2018/052232
(87) Numéro de publication internationale: WO 2019/053370

(56) Documents cités:
- EP-A1- 2 431 213
- EP-A1- 3 681 756
- EP-A2- 2 687 397
- KR-A- 20110 073 634

## Description

La présente invention concerne la charge électrique de véhicules automobiles électriques ou hybrides.

L'invention se rapporte en particulier à un chargeur de batterie embarqué sur un véhicule automobile électrique ou hybride, configuré pour réaliser une fonction supplémentaire de convertisseur de tension DC/DC.

De manière connue, les véhicules automobiles sont équipés d'un convertisseur de tension DC/DC configuré pour convertir une tension d'entrée, par exemple de 48 V, en une première tension de sortie par exemple en 12 V. Le convertisseur de tension DC/DC est par exemple utilisé pour alimenter une batterie par exemple de 12V à charger ou encore pour alimenter un équipement électrique, tel qu'un autoradio.

Par ailleurs, les véhicules automobiles sont, également de manière connue, équipés d'un chargeur de batterie à bord (en anglais « On Board Charger » ou OBC) permettant de charger la batterie du véhicule qui peut être par exemple une batterie de 48 V.

Le document EP 2 431 213 A1 décrit un tel chargeur de batterie.

Dans les véhicules automobiles connus, les fonctions de convertisseur de tension DC/DC et de chargeur à bord (OBC) sont effectuées par deux modules électroniques distincts.

Il existe un besoin pour améliorer encore les véhicules automobiles hybrides ou électriques, et pour minimiser le coût et l'encombrement des chargeurs et systèmes électroniques embarqués.

L'invention vise à répondre à ce besoin, et a ainsi pour objet, selon l'un de ses aspects, un chargeur de batterie selon la revendication 1.

Dans un mode particulier de réalisation de l'invention, la deuxième tension est une tension continue.

Dans un mode particulier de réalisation de l'invention, la première tension est une tension continue.

Dans un mode particulier de réalisation de l'invention, la première et la deuxième tension sont des tensions continues.

Dans un mode particulier de réalisation de l'invention, la première tension est délivrée lorsque le pont aval est alimenté par le secondaire du transformateur et lorsque l'interrupteur d'isolement est ouvert.

Grâce à l'invention, on combine des fonctions électroniques qui étaient de manière connue effectuées par des composants distincts, ce qui permet de réduire l'encombrement total ainsi que les coûts de production.

En outre, le refroidissement et le circuit de contrôle des transistors peuvent être mutualisés, de sorte que l'encombrement total ainsi que les coûts de production peuvent en être encore améliorés.

Le convertisseur de tension principal peut comporter un ou plusieurs ponts amont, notamment un ou jusqu'à autant que de transformateurs. Un même pont amont peut alimenter un ou plusieurs transformateurs.

En outre, le convertisseur de tension principal peut comporter un ou plusieurs ponts aval, en particulier autant que de transformateurs.

La présence d'un ou plusieurs transformateurs est utile dans la mesure où le chargeur comporte un convertisseur de tension principale isolé.

Le pont amont de transistors peut comporter au moins une branche de transistors.

Dans l'invention, on comprend qu'on utilise un pont du chargeur pour réaliser une fonction de convertisseur de tension DC/DC. On utilise le pont aval du convertisseur pour délivrer lorsque l'interrupteur d'isolement est ouvert la première tension (fonction chargeur), et lorsque l'interrupteur d'isolement est fermé on utilise au moins une branche du pont aval pour générer, en commandant tout ou partie des transistors du pont aval alimenté par ladite batterie, une deuxième tension différente de la première tension (fonction convertisseur).

Une telle configuration est rendue possible par le fait qu'en général, les fonctions de chargeur et de convertisseur ne sont pas utilisées au même moment. La fonction de chargeur est utilisée lorsque le véhicule est à l'arrêt, et la fonction de convertisseur lorsque le véhicule est en roulage.

Les deux fonctions de chargeur et de convertisseur peuvent être utilisées simultanément dans le cas où le chargeur conforme à l'invention comporte plusieurs bras identiques et parallèles. Dans ce cas, au moins un bras peut être attribué à chacune des fonctions de chargeur et de convertisseur.

La deuxième tension peut permettre d'alimenter le réseau de bord du véhicule automobile, par exemple pour permettre la charge d'un téléphone mobile à bord.

Les première et deuxième tensions de sortie sont avantageusement reliées à une masse commune.

La première tension de sortie peut être inférieure à 60 V, mieux inférieure ou égale à 48 V. Dans un mode de réalisation, la première tension de sortie est de 48 V.

La deuxième tension de sortie peut être inférieure à 60 V, mieux inférieure ou égale à 48 V. Dans un mode de réalisation, la deuxième tension de sortie est de 12 V ou 24 V.

Le chargeur comporte en outre une capacité disposée entre une sortie de bas potentiel du pont aval et la borne de ledit au moins un interrupteur d'isolement non reliée, notamment directement, à un point milieu de l'une des branches du pont aval, notamment de la deuxième branche

En d'autres termes, la capacité est reliée électriquement par une de ses bornes à la sortie de bas potentiel du pont aval et par l'autre de ses bornes, notamment directement, à un point milieu de l'une des branches du pont aval, notamment de la deuxième branche uniquement lorsque l'interrupteur d'isolement est fermé

Dans un mode de réalisation particulier de l'invention, ladite capacité peut être non polarisée.

Le chargeur peut comporter un ou plusieurs interrupteurs d'isolement, par exemple 1, 2, 3, 4, 5 ou 6. Un nombre élevé d'interrupteurs d'isolement peut permettre d'améliorer la puissance de l'ensemble.

Le chargeur peut comporter en outre au moins un interrupteur de sécurité entre ledit au moins un interrupteur d'isolement et la sortie de la deuxième tension. Lorsque le ou les interrupteurs d'isolement sont ouverts, le ou les interrupteurs de sécurité peuvent être ouverts.

Le chargeur peut comporter un ou plusieurs interrupteurs de sécurité, étant par exemple de 1, 2, 3, 4, 5 ou 6. Un nombre élevé d'interrupteurs de sécurité peut permettre d'améliorer la puissance de l'ensemble. En principe, le nombre d'interrupteurs d'isolement et de sécurité est égal.

L'inductance magnétisante du transformateur est connectée par une de ses extrémités au point milieu de la première branche du pont aval du transistor et forme ainsi un convertisseur-abaisseur de tension de type « Buck ». L'autre extrémité de l'inductance magnétisante du transformateur est connectée au point milieu de la deuxième branche du pont aval du transformateur.

Dans un mode particulier de réalisation, les transistors du pont amont sont maintenus ouverts lorsque ledit au moins un interrupteur d'isolement est fermé.

L'invention a encore pour objet, indépendamment ou en combinaison avec ce qui précède, un véhicule automobile équipé d'un chargeur tel que décrit ci-dessus. Le véhicule automobile peut être tout électrique ou hybride.

L'invention a encore pour objet un procédé de charge d'une batterie de véhicule automobile utilisant le chargeur selon l'invention. Selon un tel procédé, on ferme l'interrupteur d'isolement TR relié, notamment directement, à un point milieu de l'une des branche du pont aval, notamment d'une deuxième branche du pont aval du chargeur, pour utiliser au moins l'une des branche du pont aval, notamment une première branche du pont aval, et générer, en commandant tout ou partie des transistors du pont aval alimenté par ladite batterie, une deuxième tension différente de la première tension.

Le procédé peut comporter tout ou partie des caractéristiques de l'invention exposées ci-dessus.

### Description détaillée

L'invention pourra être mieux comprise à la lecture de la description détaillée qui va suivre, d'exemples de mise en œuvre non limitatifs de celle-ci, et à l'examen du dessin annexé, sur lequel :
- la figure 1 illustre un circuit électrique connu de convertisseur DC/DC,
- les figures 2a à 2c illustrent des variantes connues de réalisation de circuits électriques de chargeurs à bord (OBC), et
- la figure 3 illustre un exemple de réalisation d'un chargeur de batterie conforme à l'invention.

### Convertisseur de tension principal DC/DC

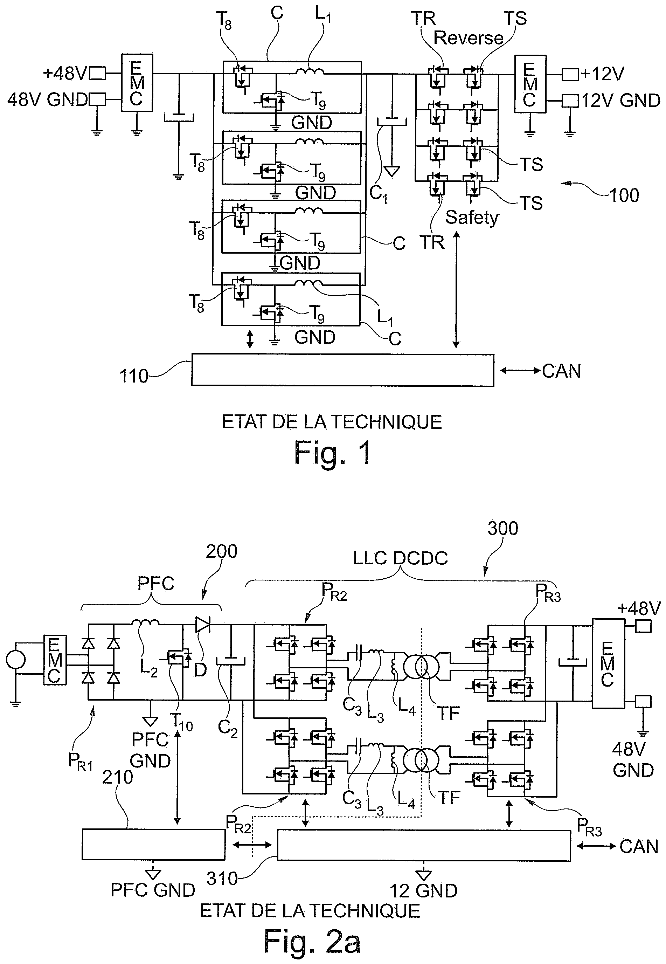

On a illustré à la figure 1 un convertisseur de tension principale 100 DC/DC configuré pour convertir une première tension d'entrée, par exemple de 48 V, en une deuxième tension de sortie, par exemple en 12 V.

Le convertisseur de tension principal 100 comporte un pont fonctionnant en hacheur, de manière connue en soi. Un tel convertisseur est dit hacheur abaisseur (« *buck* » en anglais), et convertit une tension continue en une autre tension continue de plus faible valeur. Dans un exemple de réalisation, il peut s'agir par exemple de convertir une tension de 48 V en une tension de 12 V.

Dans l'exemple de réalisation de la figure 1, le convertisseur DC/DC 100 comporte 4 cellules C disposées en parallèle. Bien entendu, le nombre de cellules C pourrait être différent sans que l'on ne sorte du cadre de la présente invention. Il peut par exemple être compris entre 2 et 12, étant par exemple de 2, 3, 4, 5 ou 6.

L'utilisation de plusieurs cellules peut permettre de réduire les contraintes sur les semi-conducteurs. On parle alors de *hacheurs entrelacés* car les cellules du convertisseur conduisent toutes vers un même condensateur de sortie C1 avec un déphasage de T/4 entre les commandes des transistors de chaque cellule successive où T est la période du cycle de fonctionnement du convertisseur. En d'autres termes, le rapport cyclique au sein de chacune des cellules est identique mais les commandes des transistors sont déphasées de T/4 d'une cellule à l'autre.

Dans l'exemple décrit ici, ce condensateur de sortie C2 est non polarisé.

Chaque cellule C comporte un premier transistor T8, un deuxième transistor T9, et une inductance L1.

Dans l'exemple décrit ici, les transistors T1 et T2 sont des MOSFETs.

Le fonctionnement d'un tel convertisseur 100 peut être divisé en deux configurations suivant l'état du transistor T8.

Dans l'état passant, le transistor T8 est fermé, le courant traversant l'inductance L1 augmente linéairement. La tension aux bornes du deuxième transistor T9 étant négative, aucun courant ne le traverse.

Dans l'état bloqué, le transistor T8 est ouvert. Le deuxième transistor T9 devient passant afin d'assurer la continuité du courant dans l'inductance L1. Le courant traversant l'inductance L1 décroît.

Par ailleurs, le convertisseur 100 comporte des interrupteurs d'isolement TR (en anglais « *reverse* »), reliés directement à la sortie de la ou des cellules C, permettant lorsque fermé de délivrer la tension de sortie, et lorsqu'ouvert de protéger la ou les cellules C.

Le convertisseur 100 comporte également des interrupteurs de sécurité TS (en anglais « *safety* »), lesquels sont montés chacun en série avec un interrupteur d'isolement TR correspondant. Ces interrupteurs de sécurité TS permettent lorsque fermé de délivrer la tension de sortie, et lorsqu'ouvert de protéger la ou les cellules C.

Une telle configuration permet d'éviter le passage du courant dans les deux sens. Les interrupteurs d'isolement et de sécurité sont activés (comme interrupteur ouvert) si une sous-tension ou une surtension, c'est-à-dire des perturbations, apparaissent sur un des réseaux en entrée ou en sortie, ainsi que dans le cas d'un dysfonctionnement matériel du convertisseur DC/DC, par exemple la défaillance d'un transistor.

Chaque paire d'interrupteurs d'isolement et de sécurité est montée en parallèle avec les autres.

Dans l'exemple décrit, le convertisseur comporte 4 paires d'interrupteurs d'isolement et de sécurité, ce qui permet d'améliorer la puissance de l'ensemble, mais on ne sort pas du cadre de la présente invention si leur nombre est différent, étant par exemple de 1, 2, 3, 5 ou 6. En principe, le nombre de paires d'interrupteurs d'isolement et de sécurité est égal au nombre de cellule du convertisseur.

Dans l'exemple décrit, les interrupteurs d'isolement et de sécurité sont des transistors, par exemple du type MOSFET.

Tous les transistors et interrupteurs du convertisseur 100 sont contrôlés par un contrôleur 110 du convertisseur 100.

### Chargeur de batterie (OBC)

Un chargeur de batterie à bord (OBC) permet de charger la batterie du véhicule en fournissant une deuxième tension de sortie, qui peut être par exemple de 48 V.

Un chargeur de batterie connu de l'art antérieur peut comporter, comme illustré dans les exemples de réalisation des figures 2a à 2c, deux étages, à savoir un premier étage formé d'un convertisseur correcteur de facteur de puissance (PFC) 200, et un second étage formé d'un convertisseur LLC DC/DC 300 ou d'un DC/DC dual bridge.

### Convertisseur correcteur de facteur de puissance (PFC)

En ce qui concerne le premier étage, le convertisseur correcteur de facteur de puissance PFC 200, dans sa fonction de correction du facteur de puissance, a pour fonction principale de prélever un courant sinusoïdal et en phase avec la tension sur le réseau avec un taux de distorsion en courant inférieur à 5%, en d'autres termes le PFC ne prélève que de la puissance active sur le réseau, en l'espèce principalement le réseau électrique 220V monophasé.

Le convertisseur correcteur de facteur de puissance PFC 200 comporte, dans le mode de réalisation de la figure 2a, un convertisseur AC/DC, à savoir un pont redresseur P_{R1} et un convertisseur-élévateur de type boost comprenant un transistor T10, une diode D et une inductance L2. En outre, une capacité C2 de filtrage est placé en aval du convertisseur correcteur de facteur de puissance PFC 200 et en amont du LLC DCDC 300.

Tous les transistors, interrupteurs pouvant être ouvert (interrupteur bloqué) ou fermé (interrupteur passant), du convertisseur 200 sont contrôlés par un contrôleur 210 du convertisseur 200.

### Convertisseur LLC DC/DC

En ce qui concerne le second étage, il s'agit d'un convertisseur LLC DC/DC 300, c'est-à-dire un convertisseur comportant au moins un pont redresseur PR2, suivi d'un circuit résonant avec deux inductances L3 et L4 et une capacité C3, et d'un transformateur TF comportant un primaire et un secondaire, puis d'un pont redresseur P_{R3}.

Dans l'exemple décrit à la figure 2a, le convertisseur LLC DC/DC 300 comporte deux branches identiques et parallèles, donc deux ponts redresseurs P_{R2}, chacun suivi d'un circuit résonant avec deux inductances L3 et L4 et une capacité C3, et d'un transformateur TF comportant un primaire et un secondaire, puis d'un pont redresseur P_{R3}. Il y a donc deux transformateurs TF, puis deux ponts redresseurs P_{R3}.

Un tel mode de réalisation permet un fonctionnement à une puissance par exemple de 7kW ou 3,5kW.

Dans l'exemple décrit, les ponts redresseurs comportent des transistors. Tous les transistors (interrupteurs) du convertisseur 300 sont contrôlés par un contrôleur 310 du convertisseur 300.

Dans l'exemple de la figure 2a, le chargeur de batterie OBC n'est pas réversible.

D'autres configurations de chargeur de batterie sont possibles, en fonction de la puissance recherchée.

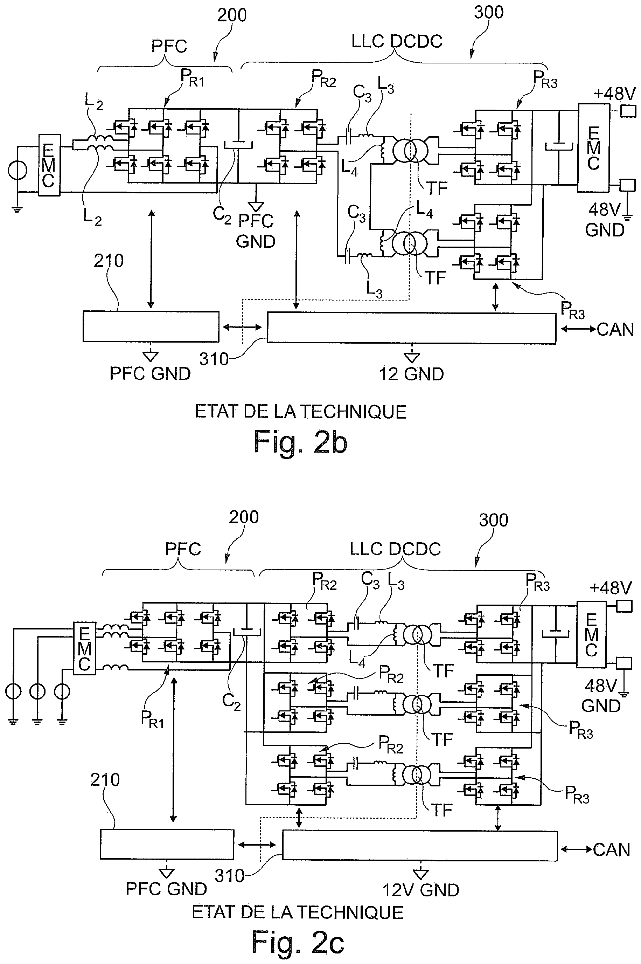

Dans la variante de réalisation illustrée à la figure 2b, le chargeur de batterie est réversible. A cet effet, il diffère de celui illustré à la figure 2a par la forme du pont redresseur PR1 (appelé en anglais « active front end rectifier »), lequel comporte des transistors formant deux premiers bras ainsi que deux inductances L2 reliées chacune au point milieu d'un des deux premier bras du pont redresseur PR1.

Enfin, et de manière optionnelle, le convertisseur correcteur de facteur de puissance PFC 200 comporte un troisième bras de transistors pour l'amélioration de la compatibilité électromagnétique (en anglais « EMC »).

Ce mode de réalisation diffère également du précédent par le fait que le convertisseur LLC DC/DC 300 comporte un seul pont redresseur P_{R2} en amont des deux transformateurs TF, ce qui permet de réduire le nombre de composants électroniques et donc le coût et l'encombrement.

Dans le mode de réalisation de la figure 2c, le chargeur de batterie est également réversible et le convertisseur LLC DC/DC 300 comporte trois branches identiques, donc trois ponts redresseurs P_{R2}, chacun suivi d'un circuit résonant avec deux inductances L3 et L4 et une capacité C3, et d'un transformateur TF comportant un primaire et un secondaire, puis d'un pont redresseur P_{R3}. Il y a donc trois transformateurs TF, puis trois ponts redresseurs P_{R3}.

Un tel mode de réalisation permet un fonctionnement à une puissance plus élevée, par exemple de 7kW ou 11kW.

Enfin, le convertisseur correcteur de facteur de puissance PFC 200 peut être triphasé plutôt que monophasé, comme dans les exemples des figures 2a et 2b.

### Chargeur de batterie (OBC) avec convertisseur dual bridge DC/DC

On connait par ailleurs des chargeurs de batterie dans lequel le convertisseur LLC DC/DC des exemples précédents peut être remplacé par un convertisseur dual bridge DC/DC. Un tel convertisseur dual bridge DC/DC comporte un premier pont primaire PR1, un deuxième pont secondaire PR2 et un transformateur entre les deux ponts. En d'autres termes le convertisseur dual bridge DC/DC ne comprend pas d'étage résonnant (pas d'inductance L3 ni de capacité C3). Le premier étage d'un chargeur de batterie utilisant un convertisseur dual-bridge DC/DC est connu de l'homme du métier et n'est pas décrit ici.

### Chargeur de batterie avec convertisseur intégré

On va maintenant décrire un chargeur de batterie embarqué conforme à l'invention.

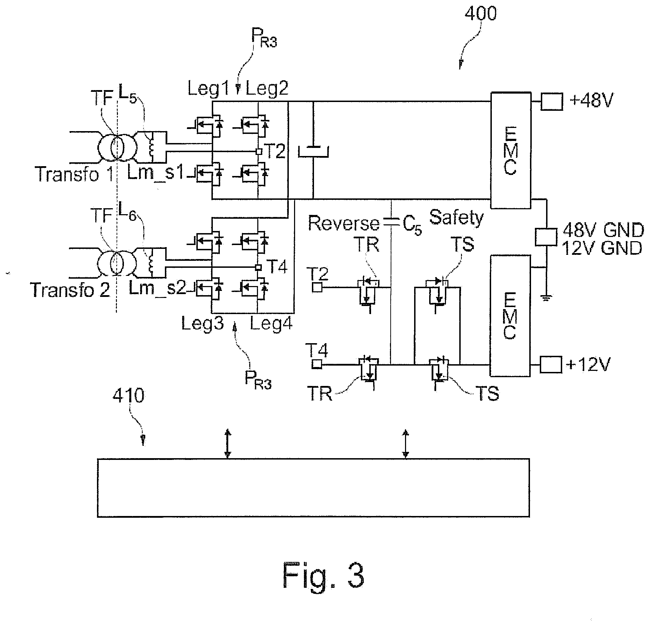

On a illustré à la figure 3 un chargeur de batterie embarqué sur un véhicule, comportant un convertisseur de tension principal comportant :
- au moins un transformateur TF comportant au moins un primaire et au moins un secondaire, et notamment dans l'exemple décrit deux transformateurs TF,
- un pont aval PR3 de transistors commandés alimentés par le secondaire du transformateur, permettant lorsque commandés en courant et/ou en tension de générer une première tension pour alimenter une batterie à charger, le pont aval comportant au moins deux branches. Dans l'exemple décrit, on a deux ponts aval PR3 identiques, chaque pont aval PR3 comportant deux branches (Leg1 et Leg2 ; Leg 3 et Leg 4).

La partie en amont des transformateurs comporte un pont amont de transistors commandés alimentant le primaire du transformateur, non représenté sur la figure 3. Cette partie amont peut par exemple être analogue à ce qui a été décrit en référence aux figures 2a à 2c.

Par ailleurs, le chargeur comporte au moins un interrupteur d'isolement TR (en anglais « *reverse* ») relié notamment directement, à un point milieu de la deuxième branche du pont aval, permettant lorsqu'ouvert d'utiliser le pont aval pour délivrer la première tension, et lorsque fermé d'utiliser au moins l'une des branches du pont aval, notamment la première branche (Leg1) du pont aval, pour générer, en commandant tout ou partie des transistors du pont aval alimenté par ladite batterie, une deuxième tension différente de la première tension. Dans l'exemple décrit, on a deux interrupteurs d'isolement TR, chacun relié directement à la deuxième branche de l'un des deux ponts aval PR3 identiques.

Le chargeur comporte en outre une capacité C5 disposée entre la sortie de bas potentiel de chacun des deux ponts aval et les interrupteurs d'isolement. Ladite capacité C5 est non polarisée. Le chargeur comporte en outre deux interrupteurs de sécurité TS entre les deux interrupteurs d'isolement TR et la sortie de la deuxième tension.

Le chargeur comporte également un circuit de contrôle des transistors 410.

Les interrupteurs d'isolement TR sont ouverts lorsque le chargeur remplit sa fonction de chargeur en fournissant la première tension de charge de la batterie du véhicule. Ainsi, les bras des ponts aval PR3 sont utilisés pour réaliser un LLC DCDC et les transistors des ponts aval PR3 sont commandés comme cela a été décrit précédemment en relation avec les figures 2a à 2b (pour réaliser la fonction OBC)

Lorsque le chargeur remplit une fonction de convertisseur de tension, pour fournir la deuxième tension, les interrupteurs d'isolement TR sont fermés et le circuit de contrôle est configuré pour utiliser les seuls transistors de la première branche Leg1, Leg3 des ponts aval PR3, en maintenant ouverts les autres transistors des ponts aval des branches Leg2 et Leg4, de façon à utiliser au moins une inductance magnétisante L6 du secondaire du transformateur TF.

En outre, les interrupteurs d'isolement TR sont reliés directement au point milieu de la deuxième branche du pont aval

Dans cette configuration, chacune des premières branches Leg1, Leg3 des ponts aval PR3 forment avec une inductance magnétisante L6 du transformateur TF un convertisseur-abaisseur de type « buck » d'un convertisseur DC/DC.

Ainsi, on utilise les inductances magnétisante L6 du secondaire des deux transformateurs pour réaliser deux convertisseur-abaisseur du convertisseur DC/DC. On réduit de ce fait le nombre d'interrupteurs d'isolement, car il en faut seulement un par pont aval, c'est-à-dire deux comme il y a deux ponts aval et deux transformateurs.

L'utilisation de deux convertisseur-abaisseur de tension de type « Buck » permet de réaliser un convertisseur DC/DC avec un déphasage de T/2 entre les commandes des transistors de chaque cellule successive où T est la période du cycle de fonctionnement du convertisseur. En d'autres termes, le rapport cyclique au sein de chacun des convertisseur-abaisseur est identique mais les commandes des transistors sont déphasées de T/2 d'un convertisseur-abaisseur à l'autre.

Les transistors du pont amont sont alors également maintenus ouverts.

Dans l'exemple décrit, les interrupteurs d'isolement et de sécurité sont des transistors. En d'autres termes, ces transistors sont utilisés comme interrupteur électronique pouvant être ouvert (transistor bloqué) ou fermé (transistor passant).

Dans l'exemple décrit ici, les commandes des transistors sont déphasées de T/2 d'un convertisseur-abaisseur à l'autre où T est la période du cycle de fonctionnement du convertisseur et 2 le nombre utilisé de première branche de ponts aval.

On a un seul contrôleur pour le convertisseur LLC DC/DC et le convertisseur de tension DC/DC.

Bien entendu, l'invention n'est pas limitée aux exemples qui viennent d'être décrits. En particulier, le nombre de bras du chargeur et le nombre de transformateurs peuvent être différents. Il peut être de 1, de 2, de 3 ou de 4, par exemple. Enfin, l'invention s'applique également aux chargeurs utilisant un convertisseur dual-bridge DC/DC.

## Revendications

1. Chargeur de batterie (400) embarqué sur un véhicule, comportant :
- un convertisseur de tension principal comportant :
- au moins un transformateur (TF) comportant au moins un primaire et au moins un secondaire,
- au moins un pont amont (PR2) de transistors commandés alimentant le primaire du transformateur (TF),
- au moins un pont aval (PR3) de transistors commandés alimentés par le secondaire du transformateur, permettant lorsque commandés en courant et/ou en tension de générer une première tension pour alimenter une batterie à charger, le pont aval comportant notamment au moins une première branche (Leg1) et une deuxième branche (Leg2),
- un circuit de contrôle des transistors (410),
- ledit chargeur de batterie (400) étant **caractérisé en ce qu'**il comporte en outre :
- au moins un interrupteur d'isolement (TR) relié, notamment directement, à un point milieu (T2) de la deuxième branche (Leg2) du pont aval, permettant lorsqu'ouvert d'utiliser le pont aval pour délivrer la première tension, et lorsque fermé d'utiliser la première branche (Leg1) du pont aval, pour générer, en commandant tout ou partie des transistors du pont aval alimenté par ladite batterie, une deuxième tension différente de la première tension, et
- une capacité (C5) disposée entre une sortie de bas potentiel du pont aval (PR3) et la borne de ledit au moins un interrupteur d'isolement (TR) non relié, notamment directement, au point milieu de la deuxième branche (Leg2) du pont aval, et **en ce que**
- le circuit de contrôle est configuré pour utiliser les seuls transistors de la première branche (Leg1) du pont aval, en maintenant ouverts les autres transistors du pont aval, de façon à utiliser au moins une inductance magnétisante (L5) du secondaire du transformateur (TF) pour générer ladite deuxième tension.

2. Chargeur selon la revendication précédente dans lequel la deuxième tension est une tension continue.

3. Chargeur selon l'une des revendications précédentes, dans lequel ladite capacité (C5) est non polarisée.

4. Chargeur selon l'une quelconque des revendications précédentes, comportant en outre au moins un interrupteur de sécurité (TS) entre ledit au moins un interrupteur d'isolement (TR) et la sortie de la deuxième tension.

5. Chargeur selon l'une quelconque des revendications précédentes, dans lequel les transistors du pont amont (PR2) sont maintenus ouverts lorsque ledit au moins un interrupteur d'isolement (TR) est fermé.

6. Procédé de charge d'une batterie de véhicule automobile utilisant un chargeur selon l'une quelconque des revendications précédentes, dans lequel on ferme l'interrupteur d'isolement (TR) relié, notamment directement, à un point milieu (T2) de l'une des branche du pont aval, notamment d'une deuxième branche (Leg2) du pont aval du chargeur, pour utiliser au moins l'une des branche du pont aval, notamment une première branche (Leg1) du pont aval, et générer, en commandant tout ou partie des transistors du pont aval alimenté par ladite batterie, une deuxième tension différente de la première tension.

7. Véhicule automobile équipé d'un chargeur selon l'une quelconque des revendications 1 à 5.

## Patentansprüche

1. Batterieladegerät (400) an Bord eines Fahrzeugs, das aufweist:
- einen Hauptspannungswandler, der aufweist:
- mindestens einen Transformator (TF), der mindestens eine Primärwicklung und mindestens eine Sekundärwicklung aufweist,
- mindestens eine vorgeschaltete Brücke (PR2) von gesteuerten Transistoren, die die Primärwicklung des Transformators (TF) speisen,
- mindestens eine nachgeschaltete Brücke (PR3) von gesteuerten Transistoren, die von der Sekundärwicklung des Transformators gespeist werden, die es ermöglichen, wenn sie strom- und/oder spannungsgesteuert werden, eine erste Spannung zu erzeugen, um eine zu ladende Batterie zu speisen, wobei die nachgeschaltete Brücke insbesondere mindestens einen ersten Zweig (Leg1) und einen zweiten Zweig (Leg2) aufweist,
- einen Kontrollstromkreis der Transistoren (410),
wobei das Batterieladegerät (400) **dadurch gekennzeichnet ist, dass** es außerdem aufweist:
- mindestens einen Trennschalter (TR), der insbesondere direkt mit einem Mittelpunkt (T2) des zweiten Zweigs (Leg2) der nachgeschalteten Brücke verbunden ist, der es ermöglicht, wenn er offen ist, die nachgeschaltete Brücke zu verwenden, um die erste Spannung zu liefern, und wenn er geschlossen ist, den ersten Zweig (Leg1) der nachgeschalteten Brücke zu verwenden, um durch Steuern aller oder eines Teils der Transistoren der von der Batterie gespeisten nachgeschalteten Brücke eine zweite Spannung anders als die erste Spannung zu erzeugen, und
- einen Kondensator (C5), der zwischen einem Ausgang niedrigen Potentials der nachgeschalteten Brücke (PR3) und der Anschlussklemme des mindestens einen Trennschalters (TR) angeordnet ist, der nicht insbesondere direkt mit dem Mittelpunkt des zweiten Zweigs (Leg2) der nachgeschalteten Brücke verbunden ist,
und dass
- der Kontrollstromkreis konfiguriert ist, nur die Transistoren des ersten Zweigs (Leg1) der nachgeschalteten Brücke zu verwenden, indem die anderen Transistoren der nachgeschalteten Brücke offen gehalten werden, um mindestens eine magnetisierende Drosselspule (L5) der Sekundärwicklung des Transformators (TF) zu verwenden, um die zweite Spannung zu erzeugen.

2. Ladegerät nach dem vorhergehenden Anspruch, wobei die zweite Spannung eine Gleichspannung ist.

3. Ladegerät nach einem der vorhergehenden Ansprüche, wobei der Kondensator (C5) nicht gepolt ist.

4. Ladegerät nach einem der vorhergehenden Ansprüche, das außerdem mindestens einen Sicherheitsschalter (TS) zwischen dem mindestens einen Trennschalter (TR) und dem Ausgang der zweiten Spannung aufweist.

5. Ladegerät nach einem der vorhergehenden Ansprüche, wobei die Transistoren der vorgeschalteten Brücke (PR2) offen gehalten werden, wenn der mindestens eine Trennschalter (TR) geschlossen ist.

6. Verfahren zum Laden einer Kraftfahrzeugbatterie unter Verwendung eines Ladegeräts nach einem der vorhergehenden Ansprüche, wobei der Trennschalter (TR) geschlossen wird, der insbesondere direkt mit einem Mittelpunkt (T2) eines der Zweige der nachgeschalteten Brücke verbunden ist, insbesondere eines zweiten Zweigs (Leg2) der nachgeschalteten Brücke des Ladegeräts, um mindestens einen der Zweige der nachgeschalteten Brücke zu verwenden, insbesondere einen ersten Zweig (Leg1) der nachgeschalteten Brücke, und unter Steuerung aller oder eines Teils der Transistoren der von der Batterie gespeisten nachgeschalteten Brücke eine zweite Spannung anders als die erste Spannung zu erzeugen.

7. Kraftfahrzeug, das mit einem Ladegerät nach einem der Ansprüche 1 bis 5 ausgestattet ist.

## Claims

1. A battery charger (400) onboard a vehicle, including:
- a main voltage converter including:
- at least one transformer (TF) including at least one primary and at least one secondary,
- at least one upstream bridge (PR2) of controlled transistors supplying the primary of the transformer (TF),
- at least one downstream bridge (PR3) of controlled transistors which are supplied by the secondary of the transformer, providing for, when current- and/or voltage-controlled, generating a first voltage to supply a battery to be charged, the downstream bridge including notably at least one first leg (Leg1) and one second leg (Leg2),
- a transistor control circuit (410),
said battery charger (400) **characterized in that** it further includes:
- at least one isolating switch (TR) connected, notably directly, to a middle point (T2) of the second leg (Leg2) of the downstream bridge, providing for, when open, using the downstream bridge to deliver the first voltage, and when closed, using the first leg (Leg1) of the downstream bridge, in order to generate, by controlling all or some of the transistors of the downstream bridge supplied by said battery, a second voltage that is different from the first voltage,
- a capacitance (C5) arranged between a low-potential output of the downstream bridge (PR3) and a terminal of said at least one isolating switch (TR) not connected, notably directly, to the middle point of the second leg (Leg2) of the downstream bridge, and **in that**
- the control circuit is configured to use only the transistors of the first leg (Leg1) of the downstream bridge, while keeping the other transistors of the downstream bridge open, so as to use at least one magnetizing inductance (L5) of the secondary of the transformer (TF) in order to generate said second voltage.

2. The charger as claimed in the preceding claim, in which the second voltage is a DC voltage.

3. The charger as claimed in any one of the preceding claims, in which said capacitance (C5) is non-polarized.

4. The charger as claimed in any one of the preceding claims, additionally including at least one safety switch (TS) between said at least one isolating switch (TR) and the second voltage output.

5. The charger as claimed in any one of the preceding claims, in which the transistors of the upstream bridge (PR2) are kept open when said at least one isolating switch (TR) is closed.

6. A method for charging a motor vehicle battery using a charger as claimed in any one of the preceding claims, in which the isolating switch (TR) is closed, which switch is connected, notably directly, to a middle point (T2) of one of the legs of the downstream bridge, notably of a second leg (Leg2) of the downstream bridge of the charger, in order to use at least one of the legs of the downstream bridge, notably a first leg (Leg1) of the downstream bridge, and to generate, by controlling all or some of the transistors of the downstream bridge supplied by said battery, a second voltage that is different from the first voltage.

7. A motor vehicle equipped with a charger as claimed in any one of claims 1 to 5.
